# EUROPEAN PATENT APPLICATION

(11) **EP 1 961 304 A1**
(43) Date of publication of application: **27.08.2008**
(21) Application number: 08151742.7
(22) Date of filing: 21.02.2008
(51) Int. Cl.: A01N 43/56, A01N 25/04

(54) **High efficiency formulation with a reduced environmental impact**

(30) Priority: 23.02.2007 IT MI20070355
(71) Applicant: Isagro Ricerca S.r.l., 20153 Milano (IT)
(72) Inventor: Vanzulli, Mauro, 21047 Saronno (Varese) (IT)
(74) Representative: De Gregori, Antonella

(57) **Abstract**

Formulations are described of the emulsifiable concentrate type, having a high herbicidal efficiency and a reduced environmental impact, containing the compound methyl (E)-4-[2-chloro-5-(4-chloro-5-difluoromethoxy-1-methylpyrazol-3-yl)-4-fluorophenoxy]-3-methoxybut-2-enoate as active principle and one or more alkyl esters of lactic acid as solvent.

## Description

The present invention relates to formulations with a high efficiency and reduced environmental impact.

In particular, the present invention relates to formulations with a high efficiency containing a compound having herbicidal activity capable of inhibiting protoporphyrinogen oxidase, at least one green solvent and also, optionally, one or more other compounds capable of broadening the herbicidal spectrum of said compound and/or synergically increasing its efficacy.

The herbicidal compounds used in agriculture are currently formulated as solid or liquid preparations, or as solid-in-liquid suspensions. These formulations must be capable of dissolving, or being dispersed, or they must be capable of producing stable emulsions when diluted in suitable volumes of water, which are then applied to crops or on the soil in which the crop is grown, before or after sowing or germination.

Many herbicidal compounds are advantageously formulated as emulsifiable concentrates (EC), which consist of a solution of one or more active principles in organic solvent, capable of generating microemulsions of particles with a lipophilic nucleus when diluted in water. The organic solvent, moreover, often allows a better penetration of the active principle maximizing the efficacy of the product.

The selectivity of herbicides mainly depends on their drug kinetics: the different penetration rate of the product into the vegetable species is a factor which is often at the basis of the selectivity between weed and crop: if the herbicide penetrates a weed more rapidly, for example, it will accumulate more in the weed than in the crop to be weeded. On the basis of the properties indicated above, the use of the EC formulation therefore leads to an increase in the risk of phytotoxicity when a product is also potentially harmful for the crop.

The Applicant has prepared formulations based on the herbicidal compound having formula (I), 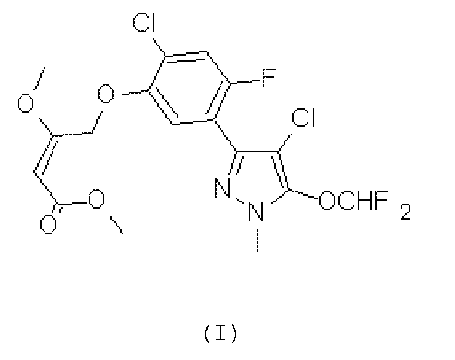 methyl (*E*)-4-[2-chloro-5-(4-chloro-5-difluoromethoxy-1-methylpyrazol-3-yl)-4-fluorophenoxy]-3-methoxybut-2-enoate, belonging to the group of protoporphyrinogen-oxidase inhibitors and described in patent application EP 1020448.

The preferred formulations, with respect to the activity against weeds, have proved to be those of the emulsifiable concentrate type (EC), which allow the use of the active principle with low application doses.

Even though formulations of the emulsifiable concentrate (EC) type prepared with the use of traditional aromatic solvents (for example Solvesso 100 or Solvesso 150), are stable and effective formulates, they have shown an unacceptable phytotoxicity with respect to the crops to be weeded.

An objective of the present invention is therefore to find formulations of the emulsifiable concentrate type which overcome the disadvantages of the state of the art.

Numerous solvents alternative to aromatic solvents were consequently tested, among which also solvents classified as "green solvents". This definition relates to toxicity-free solvents, coming from renewable sources and, when deriving from a production process, obtainable through non-polluting methods. Examples of green solvents are alkyl carbonates, alkyl esters of adipic acid, alkyl esters of glutaric acid, alkyl esters of succinic acid, N,N-dialkylamides, lactones, vegetable oils, alkyl esters of vegetable oils, alkyl esters of lactic acid.

The Applicant has found that, whereas most of the green solvents listed above used in EC formulations do not bring significant improvements in phytotoxicity with respect to the crops to be weeded, alkyl esters of lactic acid having the general formula (II): 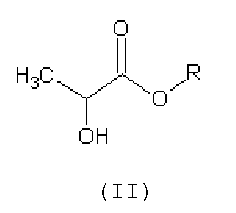 wherein R represents a linear or branched C₁-C₈ alkyl group, very surprisingly allow formulations of the emulsifiable concentrate type to be obtained, in which the compound having formula (I) is present in low doses and with a much lower phytotoxicity with respect to the crops to be weeded than that observed with the use of traditional aromatic solvents.

An object of the present invention therefore relates to formulations of the emulsifiable concentrate type comprising:
a) the compound methyl (E)-4-[2-chloro-5-(4-chloro-5-difluoromethoxy-1-methylpyrazol-3-yl)-4-fluorophenoxy]-3-methoxybut-2-enoate having formula (I), as herbicidal active principle: 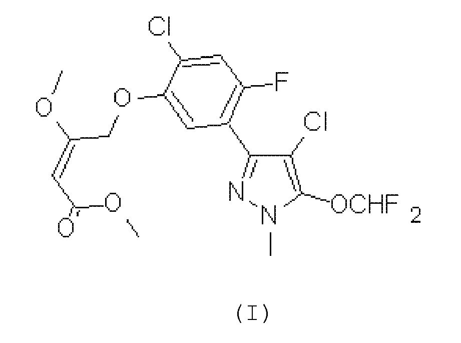
b) at least one derivative of lactic acid having general formula (II) wherein R represents a linear or branched C₁-C₈ alkyl group as solvent; 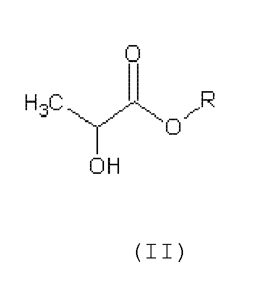
c) one or more surfactants and optionally antifoam agents and/or stabilizers.

A further object of the present invention relates to the use of formulations of emulsifiable concentrate type comprising:
a) the compound methyl (E)-4-[2-chloro-5-(4-chloro-5-difluoromethoxy-1-methylpyrazol-3-yl)-4-fluorophenoxy]-3-methoxybut-2-enoate having formula (I), as herbicidal active principle: 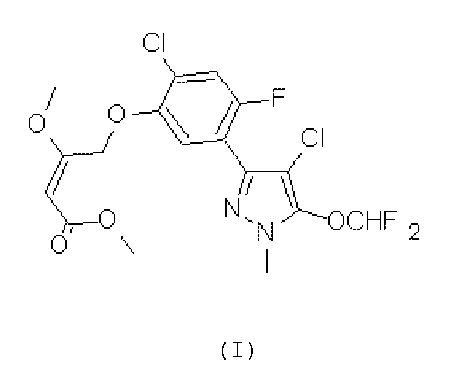
b) at least one derivative of lactic acid having general formula (II) wherein R represents a linear or branched C₁-C₈ alkyl group as solvent;
c) one or more surfactants and optionally antifoam agents and/or stabilizers,
in the selective control of weeds in agricultural crops.

Lactic acid has an asymmetrical carbon atom and can therefore exist in two enantiomer forms R and S; the use as solvents of ester derivatives of racemic RS-lactic acid, R-lactic acid, S-lactic acid, and their partially resolved mixtures, falls within the spirit of the present invention.

Preferred examples of derivatives of lactic acid which can be used in the above formulations are propyl ester and butyl ester. All these derivatives are easily available on the market at an acceptable cost.

The preparation of the formulations according to the present invention is effected according to known methods, by mixing the components in the desired ratios and in any order, adding the compound having formula (I) and the other components of the formulation to the diluent medium having general formula (II), or adding the diluent medium having general formula (II) to the compound of formula (I) and to the other components of the formulation.

The concentration of the compound having formula (I) in the formulations object of the present invention can range from 0.5 to 30% by weight, preferably from 2 to 10% by weight.

Surfactants which can be used are wetting and emulsifying agents, of the non-ionic type (polyethoxylated alkyl phenols, polyethoxylated styryl phenols, ethoxy-propoxylated aryl phenols, polyethoxylated fatty alcohols, etc.), of the anionic type (alkylbenzenesulphonates, alkylsulphonates, etc.), of the cationic type (quaternary alkyl ammonium salts, etc.).

It is also possible to add stabilizers (for example antioxidants, ultraviolet-ray absorbers, etc.) and antifoam agents (for example siliconic).

In order to broaden the action range of the above compositions, it is possible to add other active ingredients, such as, for example, other herbicides, fungicides, insecticides, acaricides, fertilizers.

Examples of other herbicides which can be added to the formulations to broaden their range and possibly produce synergic compositions are:
acetochlor, acifluorfen, aclonifen, AKH-7088, alachlor, ametryn, amicarbazone, amidosulfuron, amitrole, anilofos, asulam, atrazine, azafenidin, azimsulfuron, aziprotryne, BAY MKH 6561, beflubutamid, benazolin, benfluralin, benfuresate, bensulide, bentazone, benzfendizone, benzobicyclon, benzofenap, benzthiazuron, bifenox, bilanafos, bromacil, bromobutide, bromofenoxim, bromoxynil, butachlor, butafenacil, butamifos, butenachlor, butralin, butroxydim, butylate, cafenstrole, carbetamide, carfentrazone-ethyl, chlomethoxyfen, chloramben, chlorbromuron, chlorbufam, chlorflurenol, chloridazon, chlornitrofen, chlorotoluron, chloroxuron, chlorpropham, chlorsulfuron, chlorthal, chlorthiamid, cinidon ethyl, cinmethylin, cinosulfuron, clethodim, clomeprop, clopyralid, cloransulam-methyl, cumyluron (JC-940), cyanazine, cycloate, cyclosulfamuron, cycloxydim, cyhalofop-butyl, 2,4-D, 2,4-DB, daimuron, dalapon, desmedipham, desmetryn, dicamba, dichlobenil, dichlorprop, dichlorprop-P, diclofop, diclosulam, diethatyl, difenoxuron, difenzoquat, diflufenican, diflufenzopyr, dimefuron, dimepiperate, dimethachlor, dimethametryn, dimethenamid, dinitramine, dinosseb, dinoseb acetate, dinoterb, diphenamid, dipropetryn, diquat, dithiopyr, 1-diuron, eglinazine, endothal, EPTC, espropcarb, ethalfluralin, ethametsulfuron-methyl, ethidimuron, ethiozin (SMY 1500), ethofumesate, ethoxyfen-ethyl (HC-252), etobenzanid (HW 52), fentrazamide, fenuron, flamprop, flamprop-M, flazasulfuron, florasulam, fluazifop, fluazifop-P, fluazolate (JV 485), flucarbazone-sodium, fluchloralin, flufenacet, flufenpyr ethyl, flumetsulam, flumiclorac-pentyl, flumioxazin, flumipropin, fluoroglycofen, fluoronitrofen, flupoxam, flupropanate, flupyrsulfuron, flurenol, fluridone, flurochloridone, flurtamone, fluthiacet-methyl, fomesafen, foramsulfuron, fosamine, furyloxyfen, glufosinate, glyphosate, haloxyfop, haloxyfop-P-methyl, hexazinone, imazamethabenz, imazapic, imazapyr, imazaquin, imazethapyr, imazosulfuron, indanofan, iodosulfuron, isopropalin, isoproturon, isouron, isoxaben, isoxachlortole, isoxaflutole, isoxapyrifop, KPP-421, lactofen, lenacil, linuron, LS830556, MCPA, MCPB, mecoprop, mecoprop-P, mefenacet, metolachlor, S-metolachlor, mesosulfuron, metamitron, metazachlor, methabenzthiazuron, methazole, methoprotryne, methyldymron, metobenzuron, metobromuron, metosulam, metoxuron, metribuzin, metsulfuron-methyl, molinate, monalide, monolinuron, naproanilide, napropamide, naptalam, NC-330, neburon, nicosulfuron, nipyraclofen, norflurazon, orbencarb, orthosul-famuron, oryzalin, oxadiargyl, oxadiazon, oxasulfuron, oxaziclomefone, oxyfluorfen, paraquat, pebulate, pendimethalin, pentanochlor, pentoxazone, pethoxamid, phenmedipham, picloram, picolinafen, piperophos, pretilachlor, primisulfuron, prodiamine, profluazol, proglinazine, prometon, propachlor, propaquizafop, propazine, propham, propisochlor, propyzamide, prosulfocarb, prosulfuron, pyraclonil, pyraflufen-ethyl, pyrazogyl (HAS-961), pyrazolynate, pyrazosulfuron, pyrazoxyfen, pyribenzoxim, pyributicarb, pyridafol, pyridate, pyriftalid, pyriminobac-methyl, pyrithiobac-sodium, quinclorac, quinmerac, quizalofop, quizalofop-P, rimsulfuron, sethoxydim, siduron, simazine, simetryn, sulcotrione, sulfentrazone, sulfometuron-methyl, sulfosulfuron-methyl, 2,3,6-TBA, TCA-sodium, tebutam, tebuthiuron, tepraloxydim, terbacil, terbumeton, terbuthyl-azine, terbutryn, thenylchlor, thiazafluron, thiazopyr, thidiazimin, thifensulfuron-methyl, thiobencarb, tiocarbazil, tioclorim, tralkoxydim, triallate, triasulfuron, triaziflam, tribenuron-methyl, triclopyr, trietazine, trifluralin, triflusulfuron-methyl, tritosulfuron, UBI-C4874, vernolate.

A further object of the present invention relates to a method for the selective control of weeds in agricultural crops by the application of the formulations comprising the compound having formula (I) as active principle and the compounds having general formula (II) as solvents.

Examples of weeds which can be effectively controlled using the compounds having general formula (I) are: Abutilon theofrasti, Alisma plantago, Amaranthus spp., Amni maius, Capsella bursa pastoris, Chenopodium album, Convolvulus sepium, Galium aparine, Geranium dissectum, Ipomea spp., Matricaria spp., Papaver rhoaes, Phaseolus aureus, Polygonum persicaria, Portulaca oleracea, Sida spinosa, Sinapsis arvensis, Solanum nigrum, Stellaria media, Veronica spp., Viola spp., Xanthium spp., Alopecurus myosuroides, Avena fatua, Cyperus spp., Digitaria sanguinalis, Echinocloa spp., Heleocaris avicularis, Heteranthera spp., Panicum spp., Poa spp., Scirpus spp., Sorghum spp., etc.

As already specified, at the doses of use effective for a good control of weeds, the formulations according to the present invention have shown a reduced phytotoxicity with respect to important agrarian crops such as rice (Oryza sativa), wheat (Triticum sp.), barley (Hordeum vulgare), maize (Zea mays), soya bean (Glycine max) .

Particularly preferred is the use of said formulations for the control of weeds of wheat and barley.

Effective applicative doses of compound (I) have proved to be within the range of 5-20 g per hectare in post-emergence applications and 30-100 g per hectare in pre-emergence applications.

The possibility of using reduced doses of the herbicidal active principle, associated with a lack of toxicity of the solvents having formula (II) with respect to animal and vegetable organisms, make these formulations extremely advantageous and desirable with respect to environmental compatibility.

The following examples are provided for a better understanding of the invention.

### EXAMPLE 1

### Preparation of an EC formulate of compound (I) in butyl lactate (F1) .

5.2 g of compound (I) at 96.5%, solid with a melting point of 66-69°C are added to a solution of 2 g of Amepon SB 65 (stabilizer), 7 g of Soprophor TSP/724 (ionic surfactant: ethoxy-propoxylated polyaryl phenol), 3 g of Rhodacal 60/BE (anionic surfactant: calcium salt of dodecylbenzenesulfonic acid) in 82.8 g of Purasolv BL (butyl lactate). The mixture is kept under stirring at room temperature until a limpid solution is obtained.

### EXAMPLE 2

### Preparation of the EC reference formulate of compound (I) in solvesso 150 (FR).

5.2 g of compound (I) at 96.5%, solid with a melting point of 66-69°C are added to a solution of 2 g of Amepon SB 65 (stabilizer), 7 g of Soprophor TSP/724 (ionic surfactant: ethoxy-propoxylated polyaryl phenol), 3 g of Rhodacal 60/BE (anionic surfactant: calcium salt of dodecylbenzenesulfonic acid) in 82.8 g of Solvesso 150. The mixture is kept under stirring at room temperature until a limpid solution is obtained.

### EXAMPLE 3

### Evaluation of the herbicidal activity and phytotoxicity of the formulates F1 and FR

The following vegetable species were planted in vases having a diameter greater than 10 cm, a height of 10 cm and containing sandy earth:
*Capsella bursa pastoris* (CBP), *Galium aparine* (GA), *Matricaria camomilla* (MC), *Papaver rhoeas* (PR), *Stellaria media* (SM), *Veronica persica* (VP), Wheat *(Triticum,* F).

Water was added to each vase in a quantity suitable for the germination of the seeds. The vases were then divided into three groups for each vegetable species.

Fifteen days after sowing (ten in the case of wheat), i.e. when the infesting seedlings and the crop, depending on the species, had a height of 10-15 cm, the first group of vases was treated with a dispersion in water of the formulate of example 1 (**F1**).

The second group was treated with a dispersion in water of the reference formulate of example 2 (**FR**).

The third group was treated with a dispersion in water of the surfactants used dissolved in solvesso 150 and was adopted as a comparison (reference).

All the vases were kept under observation in a conditioned environment under the following environmental conditions:
- temperature: 24°C;
- relative humidity: 60%;
- photoperiod: 16 hours;
- light intensity: 10,000 lux.

Every two days the vases were uniformly watered to ensure a sufficient humidity for a good development of the plants.

Fifteen days after the treatment, the herbicidal activity and phytotoxicity were evaluated on the basis of the following scale of values which refers to the percentage of damage observed on the plants treated with respect to those not treated (reference):
- 0 = 0 - 10 % of damage;
- 1 = 11 - 30 % of damage;
- 2 = 31 - 50 % of damage;
- 3 = 51 - 70 % of damage;
- 4 = 71 - 90 % of damage;
- 5 = 91 % of damage - death of the plant.

The results obtained with the two formulates at an applicative dose of 15 g/ha of compound (I) are indicated in the following Table:

**Table Herbicidal activity and phytotoxicity of F1 and FR**

| | **CBP** | **GA** | **MC** | **PR** | **SM** | **VP** | **F** |
|---|---|---|---|---|---|---|---|
| **F1** | 5 | 5 | 5 | 5 | 5 | 5 | 0 |
| **FR** | 5 | 5 | 5 | 5 | 5 | 5 | 2 |

As can be seen, with the formulate **F1** herbicidal activity values were obtained analogous to those obtained with the reference formulate **FR**, but with a much lower phytotoxicity with respect to wheat and completely acceptable for a selective post-emergence treatment.

## Claims

1. Formulations of the emulsifiable concentrate type comprising:
a) the compound methyl (E)-4-[2-chloro-5-(4-chloro-5-difluoromethoxy-1-methylpyrazol-3-yl)-4-fluorophenoxy]-3-methoxybut-2-enoate having formula (I), as herbicidal active principle: 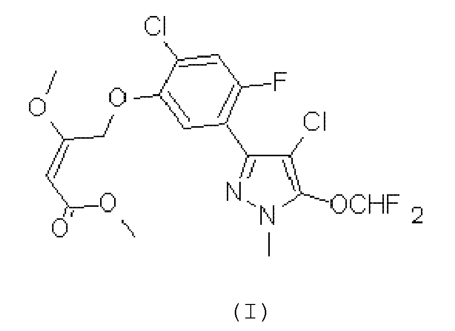
b) at least one derivative of lactic acid having general formula (II) wherein R represents a linear or branched C₁-C₈ alkyl group as solvent; 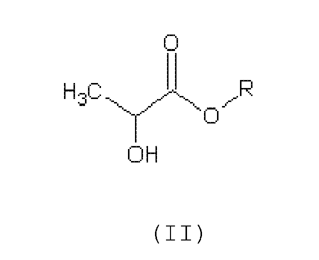
c) one or more surfactants and optionally antifoam agents and/or stabilizers.

2. The formulations according to claim 1, **characterized in that** the derivative of lactic acid is selected from ester derivatives of racemic RS-lactic acid, R-lactic acid, S-lactic acid, and their partially resolved mixtures.

3. The formulations according to claim 1 or 2, **characterized in that** the derivative of lactic acid is selected from propyl ester and butyl ester.

4. The formulations according to claim 1, **characterized in that** the compound having formula (I) is present in a concentration ranging from 0.5 to 30% by weight, preferably from 2 to 10% by weight.

5. The formulations according to claim 1, **characterized in that** the surfactants are selected from wetting and emulsifying agents of the non-ionic, anionic and/or cationic type.

6. The formulations according to claim 1, **characterized in that** they also comprise further active principles selected from herbicides, fungicides, insecticides, acaricides and/or fertilizers.

7. The formulations according to claim 6, **characterized in that** the herbicides are selected from acetochlor, acifluorfen, aclonifen, AKH-7088, alachlor, ametryn, amicarbazone, amidosulfuron, amitrole, anilofos, asulam, atrazine, azafenidin, azimsulfuron, aziprotryne, BAY MKH 6561, beflubutamid, benazolin, benfluralin, benfuresate, bensulide, bentazone, benzfendizone, benzobicyclon, benzofenap, benzthiazuron, bifenox, bilanafos, bromacil, bromobutide, bromofenoxim, bromoxynil, butachlor, butafenacil, butamifos, butenachlor, butralin, butroxydim, butylate, cafenstrole, carbetamide, carfentrazone-ethyl, chlomethoxyfen, chloramben, chlorbromuron, chlorbufam, chlorflurenol, chloridazon, chlornitrofen, chlorotoluron, chloroxuron, chlorpropham, chlorsulfuron, chlorthal, chlorthiamid, cinidon ethyl, cinmethylin, cinosulfuron, clethodim, clomeprop, clopyralid, cloransulam-methyl, cumyluron (JC-940), cyanazine, cycloate, cyclosulfamuron, cycloxydim, cyhalofop-butyl, 2,4-D, 2,4-DB, daimuron, dalapon, desmedipham, desmetryn, dicamba, dichlobenil, dichlorprop, dichlorprop-P, diclofop, diclosulam, diethatyl, difenoxuron, difenzoquat, diflufenican, diflufenzopyr, dimefuron, dimepiperate, dimethachlor, dimethametryn, dimethenamid, dinitramine, dinosseb, dinoseb acetate, dinoterb, diphenamid, dipropetryn, diquat, dithiopyr, 1-diuron, eglinazine, endothal, EPTC, espropcarb, ethalfluralin, ethametsulfuron-methyl, ethidimuron, ethiozin (SMY 1500), ethofumesate, ethoxyfen-ethyl (HC-252), etobenzanid (HW 52), fentrazamide, fenuron, flamprop, flamprop-M, flazasulfuron, florasulam, fluazifop, fluazifop-P, fluazolate (JV 485), flucarbazone-sodium, fluchloralin, flufenacet, flufenpyr ethyl, flumetsulam, flumiclorac-pentyl, flumioxazin, flumipropin, fluoroglycofen, fluoronitrofen, flupoxam, flupropanate, flupyrsulfuron, flurenol, fluridone, flurochloridone, flurtamone, fluthiacet-methyl, fomesafen, foramsulfuron, fosamine, furyloxyfen, glufosinate, glyphosate, haloxyfop, haloxyfop-P-methyl, hexazinone, imazamethabenz, imazapic, imazapyr, imazaquin, imazethapyr, imazosulfuron, indanofan, iodosulfuron, isopropalin, isoproturon, isouron, isoxaben, isoxachlortole, isoxaflutole, isoxapyrifop, KPP-421, lactofen, lenacil, linuron, LS830556, MCPA, MCPB, mecoprop, mecoprop-P, mefenacet, metolachlor, S-metolachlor, mesosulfuron, metamitron, metazachlor, methabenzthiazuron, methazole, methoprotryne, methyldymron, metobenzuron, metobromuron, metosulam, metoxuron, metribuzin, metsulfuron-methyl, molinate, monalide, monolinuron, naproanilide, napropamide, naptalam, NC-330, neburon, nicosulfuron, nipyraclofen, norflurazon, orbencarb, orthosul-famuron, oryzalin, oxadiargyl, oxadiazon, oxasulfuron, oxaziclomefone, oxyfluorfen, paraquat, pebulate, pendimethalin, pentanochlor, pentoxazone, pethoxamid, phenmedipham, picloram, picolinafen, piperophos, pretilachlor, primisulfuron, prodiamine, profluazol, proglinazine, prometon, propachlor, propaquizafop, propazine, propham, propisochlor, propyzamide, prosulfocarb, prosulfuron, pyraclonil, pyraflufen-ethyl, pyrazogyl (HAS-961), pyrazolynate, pyrazosulfuron, pyrazoxyfen, pyribenzoxim, pyributicarb, pyridafol, pyridate, pyriftalid, pyriminobac-methyl, pyrithiobac-sodium, quinclorac, quinmerac, quizalofop, quizalofop-P, rimsulfuron, sethoxydim, siduron, simazine, simetryn, sulcotrione, sulfentrazone, sulfometuron-methyl, sulfosulfuron-methyl, 2,3,6-TBA, TCA-sodium, tebutam, tebuthiuron, tepraloxydim, terbacil, terbumeton, terbuthyl-azine, terbutryn, thenylchlor, thiazafluron, thiazopyr, thidiazimin, thifensulfuron-methyl, thiobencarb, tiocarbazil, tioclorim, tralkoxydim, triallate, triasulfuron, triaziflam, tribenuron-methyl, triclopyr, trietazine, trifluralin, triflusulfuron-methyl, tritosulfuron, UBI-C4874, vernolate.

8. Use of formulations of the emulsifiable concentrate type comprising:
a) the compound methyl (*E*)-4-[2-chloro-5-(4-chloro-5-difluoromethoxy-1-methylpyrazol-3-yl)-4-fluorophenoxy]-3-methoxybut-2-enoate having formula (I), as herbicidal active principle: 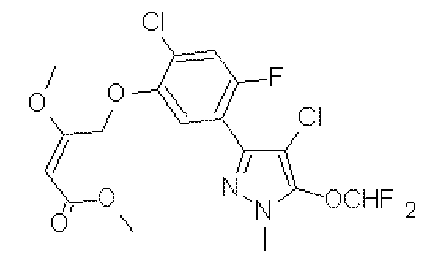 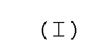
b) at least one derivative of lactic acid having general formula (II) wherein R represents a linear or branched C₁-C₈ alkyl group as solvent;
c) one or more surfactants and optionally antifoam agents and/or stabilizers;
for the selective control of weeds in agricultural crops.

9. Use of formulations according to any of the claims from 2 to 7 for the selective control of weeds in agricultural crops.

10. Use according to claim 8 or 9 for the control of the weeds Abutilon theofrasti, Alisma plantago, Amaranthus spp., Amni maius, Capsella bursa pastoris, Chenopodium album, Convolvulus sepium, Galium aparine, Geranium dissectum, Ipomea spp., Matricaria spp., Papaver rhoaes, Phaseolus aureus, Polygonum persicaria, Portulaca oleracea, Sida spinosa, Sinapsis arvensis, Solanum nigrum, Stellaria media, Veronica spp., Viola spp., Xanthium spp., Alopecurus myosuroides, Avena fatua, Cyperus spp., Digitaria sanguinalis, Echinocloa spp., Heleocaris avicularis, Heteranthera spp., Panicum spp., Poa spp., Scirpus spp., Sorghum spp..

11. Use according to claim 8 or 9 for the control of weeds in crops selected from rice (Oryza sativa), wheat (Triticum sp.), barley (Hordeum vulgare), maize (Zea mays), soya bean (Glycine max), preferably wheat and barley.

12. Use according to claim 8 or 9 in post-emergence and pre-emergence applications.

13. Use according to claim 12, wherein in post-emergence applications, the applicative doses of compound (I) are within the range of 5-20 g per hectare and in pre-emergence applications, the applicative doses of compound (I) are 30-100 g per hectare.

14. A method for the selective control of weeds in agricultural crops by the application of formulations of the emulsifiable concentrate type comprising:
a) the compound methyl (E)-4-[2-chloro-5-(4-chloro-5-difluoromethoxy-1-methylpyrazol-3-yl)-4-fluorophenoxy]-3-methoxybut-2-enoate having formula (I), as herbicidal active principle: 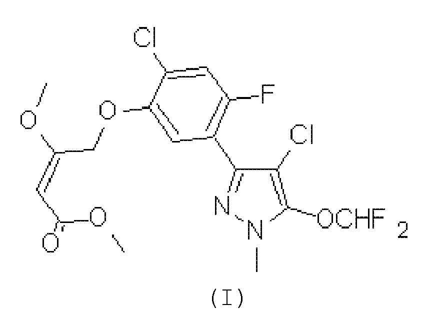
b) at least one derivative of lactic acid having general formula (II) wherein R represents a linear or branched C₁-C₈ alkyl group as solvent;
c) one or more surfactants and optionally antifoam agents and/or stabilizers.

15. The method according to claim 14, **characterized in that** the weeds are Abutilon theofrasti, Alisma plantago, Amaranthus spp., Amni maius, Capsella bursa pastoris, Chenopodium album, Convolvulus sepium, Galium aparine, Geranium dissectum, Ipomea spp., Matricaria spp., Papaver rhoaes, Phaseolus aureus, Polygonum persicaria, Portulaca oleracea, Sida spinosa, Sinapsis arvensis, Solanum nigrum, Stellaria media, Veronica spp., Viola spp., Xanthium spp., Alopecurus myosuroides, Avena fatua, Cyperus spp., Digitaria sanguinalis, Echinocloa spp., Heleocaris avicularis, Heteranthera spp., Panicum spp., Poa spp., Scirpus spp., Sorghum spp..

16. The method according to claim 14, **characterized in that** the agricultural crops are from rice (Oryza sativa), wheat (Triticum sp.), barley (Hordeum vulgare), maize (Zea mays), soya bean (Glycine max), preferably wheat and barley.

17. The method according to claim 14, **characterized in that** the application is effected in post-emergence or pre-emergence.

18. The method according to claim 17, **characterized in that** in post-emergence applications, the applicative doses of compound (I) are within the range of 5-20 g per hectare and in pre-emergence applications, the applicative doses of compound (I) are 30-100 g per hectare.
